# EUROPÄISCHE PATENTSCHRIFT

(11) **EP 2 304 291 B1**
(45) Veröffentlichungstag und Bekanntmachung des Hinweises auf die Patenterteilung: **20.03.2013**
(21) Anmeldenummer: 09768951.7
(22) Anmeldetag: 19.06.2009
(51) Int. Cl.: F16K 99/00, B01L 3/00

(54) **MIKROVENTIL UND ABDICHTEINRICHTUNG ZUR VERWENDUNG IN EINEM MIKROFLUIDIKSYSTEM SOWIE VERFAHREN ZU DEREN HERSTELLUNG**
MICROVALVE AND SEALING DEVICE FOR USE IN A MICROFLUIDICS SYSTEM, AND METHOD FOR THE PRODUCTION THEREOF
MICROSOUPAPE, DISPOSITIF D'ETANCHEITE DESTINE A ETRE UTILISE DANS UN SYSTEME MICROFLUIDE ET PROCEDE POUR SA FABRICATION

(30) Priorität: 26.06.2008 DE 102008002675
(43) Veröffentlichungstag der Anmeldung: 06.04.2011
(73) Patentinhaber: Institut Für Mikrotechnik Mainz GmbH, 55129 Mainz (DE)
(72) Erfinder: GRANSEE, Rainer, 55257 Budenheim (DE); SCHAEFFER, Eva, 55118 Mainz (DE); DRESE, Klaus-Stefan, 55130 Mainz (DE); KRAUS, Silvio, 99734 Nordhausen/OT Hesserode (DE); BAIER, Tobias, 64287 Darmstadt (DE); SCHMITZ, Felix, 55118 Mainz (DE)
(74) Vertreter: Mehler Achler
(86) Internationale Anmeldenummer: PCT/EP2009/004455
(87) Internationale Veröffentlichungsnummer: WO 2009/156102

(56) Entgegenhaltungen:
- EP-A- 1 350 759
- WO-A-01/86155
- US-A1- 2003 152 489
- HASEGAWA ET AL: "Multi-directional micro-switching valve chip with rotary mechanism" SENSORS AND ACTUATORS A, ELSEVIER SEQUOIA S.A., LAUSANNE, CH, Bd. 143, Nr. 2, 12. November 2007 (2007-11-12), Seiten 390-398, XP022576763 ISSN: 0924-4247 in der Anmeldung erwähnt

## Beschreibung

Die Erfindung betrifft ein Mikroventil zur Steuerung von Fluidströmen in einem Mikrofluidiksystem, insbesondere in einem Lab-On-a-Chip-System sowie ein Verfahren zu deren Herstellung. Das Mikroventil weist ein Substrat mit einer Dichtfläche und einen relativ zu dem Substrat beweglich angeordneten Ventilkörper auf, der eine Dichtfläche aufweist und wenigstens einen Kanal zur wahlweisen Verbindung und/oder Trennung von Fluidleitungen in dem Substrat definiert, wobei die Dichtfläche des Ventilkörpers und die Dichtfläche des Substrats fluiddicht aneinander anliegen. Die Erfindung betrifft ferner einen Probenaufbereitungschip mit einem solchen Mikroventil.

Ein Probenaufbereitungschip im Sinne dieser Erfindung ist ein mikrofluidisches System zur chemischen und biochemischen Analytik und/oder Synthese, beispielsweise für so genannte Point-of-Care-Anwendungen. Diese mikrofluidischen Systeme werden auch als Lab-On-a-Chip bezeichnet.

Als Abdichtelement im Sinne dieser Erfindung ist generell ein die Kavität (Kanal, Reservoir, Kammer) zur Umgebung des Substrats abdichtendes oder zumindest selektiv abdichtendes, d.h. für ausgewählte Substanzen undurchlässiges Element, insbesondere ein Septum, eine Membran, ein Filterelement oder dgl. zu verstehen. Das Abdichtelement kann also neben der (selektiven) Abdichtfunktion weitere Funktionen übernehmen. Beispielsweise kann es luft- oder gasdurchlässig zur Entlüftung der Kavität sein. Im Gegensatz zu dem Ventilkörper, der aufgrund seiner Funktion relativ zu dem Substrat beweglich ist, kann das Abdichtelement unbeweglich mit dem Substrat verbunden sein.

Mikroventile der eingangs genannten Art sind bekannt. Beispielhaft wird auf die Offenlegungsschrift DE 102 27 593 A1, das Patent US 6,748,975 B2 und den Aufsatz "10-Way micro switching valve chip for multi-directional flow control", Tadahiro Hasegawa et al, 7th International Conference on Miniaturized Chemical and Biochemical Analysis Systems, 5. - 9. Oktober 2003, Squaw Valley, California USA hingewiesen.

Aus der DE 102 27 593 A1 ist beispielsweise ein Mikroventil bekannt, welches ein Substrat und eine Abdeckplatte als Ventilkörper aufweist, die in fluiddichtem Kontakt aufeinander liegende Kontaktflächen aufweisen und derart zueinander positionierbar sind, dass Fluidleitungen wahlweise verbunden oder getrennt werden können. Das Mikroventil ist entweder als Drehventil mit einer zylinderförmigen Abdeckplatte oder als Schiebeventil mit einer rechteckigen Abdeckplatte offenbart. Als Substrat- und Abdeckplattenmaterial werden bevorzugt polymere Materialien und wahlweise Verbundwerkstoffe vorgeschlagen.

Die vorliegende Erfindung befasst sich mit der Frage, wie bei derartigen Mikroventilen eine einfache und funktionssichere Verbindung von dem Ventilkörper bzw. dem Abdichtelement zu dem Substrat geschaffen werden kann. Da die eingangs bezeichneten Mikrofluidiksysteme und insbesondere die Lab-On-a-Chip-Systeme in der Regel für die EinmalVerwendung konzipiert sind, ist eine kostengünstige Lösung erstrebenswert. Hierfür bietet die DE 102 27 593 A1 keine Anhaltspunkte.

In der US 6,748,975 B2 ist ein Drehventil offenbart, welches aus einem relativ zu dem Substrat (oder Stator) drehbaren Ventilkörper (oder Rotor) gebildet wird. Der Rotor ist zwischen zwei oder mehreren Ventilstellungen drehbar, in welchen einer oder mehrere Kanäle in dem Rotor wahlweise eine oder mehrere Einlassöffnungen mit einer oder mehreren Auslassöffnungen verbindet oder diese trennt. Der Rotor liegt mit einer Kontaktfläche auf einer entsprechenden Kontaktfläche des Stators auf. Die Position des Rotors bezüglich des Stators wird durch Einsetzen beider Elemente in ein Ventilgehäuse definiert, welches außer dem Rotor und dem Stator diverse Mittel zum Andrücken und Betätigen des Ventils einschließt. Zwar sind in diesem Fall der Rotor und der Stator lose Einzelteile, die zum Einmalgebrauch geeignet scheinen. Jedoch ist ein erheblicher Aufwand zum Zusammenbau des funktionsfähigen Ventils erforderlich und somit die Handhabung des Ventils erschwert.

Auch in dem oben genannten Aufsatz von Hasegawa et al. ist ein Drehventil bestehend aus einem Substrat und einem drehbaren Ventilkörper gezeigt, welche mit ihren Kontaktflächen auf einander liegen. Der Ventilkörper wird aus einem Silikongummiring mit eingearbeiteten Kanälen gebildet, der mittels einer aus wenigstens vier Teilen bestehenden Mechanik einschließlich einer Andrückfeder gegen das Substrat angedrückt wird. Wie genau die Andrückfeder gegen das Substrat abgestützt ist, ist aus dem Aufsatz nicht ersichtlich. Auch hier ist anzunehmen, dass ein umgebendes Ventilgehäuse vorgesehen ist, welches die Ventilanordnung aufnimmt.

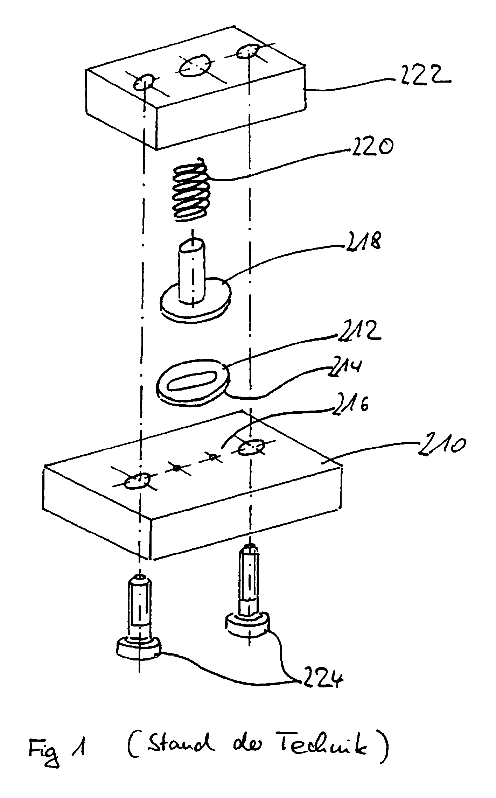

Die Anmelderin selbst hat auf der Konferenz "MipTec - The 9th International Conference and Exhibition on Drug Discovery" am 9. Mai 2006 bereits Mikroventilanordnungen mit einem Substrat 210 und einem Ventilkörper 212 der gattungsgemäßen Art vorgestellt, wie Sie nachfolgend anhand der Figur 1 beschrieben sind. Der Ventilkörper 212 ist in Form einer Elastomerdichtung ausgebildet und wird mit seiner Kontakt- oder Dichtfläche 214 gegen eine entsprechende Kontakt- oder Dichtfläche 216 des Substrats 210 mittels eines Ventilzylinders 218 angedrückt. Der Ventilzylinder 218 ist in Form eines Stempels ausgebildet und wird mittels einer Druckfeder 220 mit einer Druckkraft beaufschlagt. Die Druckfeder 220 stützt sich wiederum gegenüber einem Gehäuse 222 ab, welches mittels einer Schraubverbindung 224 direkt auf das Substrat 210 aufgeschraubt ist. Die Mikroventilanordnung gemäß Figur 1 ist zwar verglichen mit dem vorgenannten Stand der Technik von einfachem Aufbau. Dennoch werden eine Vielzahl unterschiedlicher Materialien und Komponenten benötigt und der einmalige Zusammenbau gestaltet sich in der Praxis noch immer für eine Massenfertigung zu aufwendig.

US 2003/0 152 489 offenbart ein Mikroventil gemäß dem Oberbegriff des Anspruchs 1.

Aufgabe der vorliegenden Erfindung ist es demgemäß, ein Mikroventil der eingangs genannten Art dahingehend zu verbessern, dass es mit geringem Aufwand und somit mit geringen Kosten produzierbar ist. Entsprechend ist es Aufgabe der Erfindung ein Verfahren zur Herstellung eines solchen Mikroventils bereitzustellen, welches kostengünstiger und somit für die Massenfertigung von Einmal-Produkten geeignet ist.

Die Aufgabe wird durch ein Mikroventil mit den Merkmalen des Anspruches 1 sowie durch ein Verfahren mit den Merkmalen des Anspruches 9 gelöst. Vorteilhafte Weiterbildungen der Erfindung sind Gegenstand der Unteransprüche.

Bei dem erfindungsgemäßen Mikroventil ist vorgesehen, dass der Ventilkörper mittels eines mit dem Substrat formschlüssig verbundenen Klammerelementes mit seiner Dichtfläche gegen die Dichtfläche des Substrats angedrückt wird, dass das Klammerelement zumindest abschnittsweise biegeelastisch ausgebildet ist und dass das Klammerelement und das Substrat mittels einer Schnappverbindung miteinander im Eingriff stehen.

Die Erfinder haben erkannt, dass sich der erfindungsgemäße Aufbau des Mikroventils ebenfalls zur einfachen und wirtschaftlich günstigen Montage anderer Dichtelemente mit Abdichtfunktion eignet. Bei einer erfindungsgemäßen Abdichteinrichtung zum Abdichten von Kavitäten mit einem Abdichtelement der eingangs beschriebenen Art wird das Abdichtelement mittels eines mit dem Substrat formschlüssig verbundenen Klammerelementes mit seiner Dichtfläche gegen die Dichtfläche des Substrats angedrückt, wobei das Klammerelement und/oder das Abdichtelement zumindest teilelastisch sind.

Das erfindungsgemäße Verfahren zur Herstellung des Mikroventils bzw. der Abdichteinrichtung in einem Mikrofluidiksystem, insbesondere in einem Lab-On-a-Chip-System, sieht vor, dass ein Ventilkörper mit einer Dichtfläche auf eine Dichtfläche eines Substrats aufgelegt und ein Klammerelement formschlüssig mit dem Substrat verbunden wird, wobei das Klammerelement den Ventilkörper bzw. das Abdichtelement mit seiner Dichtfläche gegen die Dichtfläche des Substrats fluiddicht andrückt.

Während bislang nur solche Ventilanordnungen bekannt sind, die aus wenigstens sechs Einzelteilen zusammengesetzt sind und in einer entsprechenden Anzahl von Einzelschritten zusammengefügt werden müssen, sind für das erfindungsgemäße Mikroventil nur drei Bauteile vorgesehen, nämlich das Substrat, der Ventilkörper und das Klammerelement. Diese drei Elemente werden in einem einfachen Arbeitsgang zusammengefügt, in dem diese aufeinander gestapelt und durch Formschluss zwischen dem Klammerelement und dem Substrat fixiert werden. Hierbei ersetzen das Klammerelement funktional die Feder. Das Klammerelement, welches den Ventilkörper auf seiner der Dichtfläche abgewandten Seite gegenüber dem Substrat abstützt, ersetzt funktional ferner das fertigungstechnisch sehr viel aufwendigere Gehäuse. Das Klammerelement kann als ein einfaches Spritzguss-, Metall- bzw. Stanzteil (z.B. aus Federblech) oder eine Kombination aus beidem, ein kunststoffumspritztes Stanzteil hergestellt sein. Auch kann der Ventilkörper als einfaches, beispielsweise scheibenförmiges Bauteil in einem oder zumindest wenigen Arbeitsschritten hergestellt werden. Bei dem erfindungsgemäßen Mikroventil wird auf die Verwendung einer Feder zur Erzeugung der Andrückkraft völlig verzichtet. Die Erfindung nutzt zu diesem Zweck die (Teil-)Elastizität des Ventilkörpers Hierzu wird eine geeignete Materialwahl für das klammerelement unter Berücksichtigung der jeweiligen Bauteilgeometrie zu treffen sein, so dass eine hinreichende Elastizität und damit Andrückkraft zur Abdichtung gewährleistet ist.

In einer vorteilhaften Weiterbildung ist der Ventilkörper druckelastisch ausgebildet.

Ersteres lässt sich vorzugsweise dadurch erzielen, dass der Ventilkörper zumindest teilweise aus einem Elastomer besteht. Als besonders geeignete Materialien erweisen sich thermoplastische Elastomere, Silikone, Fluorelastomere wie beispielsweise Viton®, Ethylen-Propylen-Dien-Kautschuk (Gummi), Styrol-Butadien-Kautschuk (SBR), Ethylen-Propylen-Kautschuk (EPM) oder Nitrilkautschuk.

Letzteres lässt sich vorzugsweise dadurch erzielen, dass das Klammerelement aus Federstahl, aus einem spritzgegossenen, teilelastischen Kunststoff oder aus einem kunststoffumspritzten Federstahl besteht. Als besonders geeignete Kunststoffe erweisen sich Thermoplaste und Duroplaste, insbesondere Acrylnitril-Butadien-Styrol-Copolymerisat (ABS), Polyoxymethylen (POM), Polyetherketone (PEEK).

Die Schnappverbindung wird vorzugsweise durch eine an dem Klammerelement ausgebildete Klinke bzw. ein Schnapphaken bereitgestellt, die bzw. der in eine korrespondierende Öffnung in dem Substrat einrastet. Hierbei kann abermals die Biegeelastizität des Klammerelementes ausgenutzt werden.

Besonders bevorzugt weist der Ventilkörper einen formstabilen Teil und eine Elastomerdichtung auf, an der die Dichtfläche ausgebildet ist, wobei eine Andrückkraft von dem Andrückring über den formstabilen Teil auf die Elastomerdichtung wirkt.

Der formstabile Teil sorgt für eine gleichmäßige Kraftverteilung der Andrückkraft über die gesamte Dichtfläche der Elastomerdichtung, während letztere aufgrund Ihrer Elastizität komprimiert wird und eine hinreichende Abdichtung sicherstellt.

In einer vorteilhaften Weiterbildung ist vorgesehen, dass der formstabile Teil zusammen mit der Elastomerdichtung im Zweikomponenten-Spritzguss hergestellt ist.

Auf diese Weise sind der formstabile Teil, der bei dieser Ausführungsform vorzugsweise aus einem formstabilen Kunststoff besteht, und die Elastomerdichtung zu einem einstückigen Ventilkörper zusammengefasst, was den Montageaufwand verringert. Auch ist die Herstellung eines Zweikomponenten-Spritzgussteils vergleichsweise kostengünstig.

Vorteilhafterweise ist der wenigstens eine Kanal in der Elastomerdichtung als Durchgangsöffnung ausgebildet.

Diese Ausführungsform der Erfindung hat den Vorteil einer einfachen Herstellbarkeit. Kanäle in Form von Vertiefungen oder Rillen werden, wenn der Ventilkörper nicht gebrauchsfertig spritzgegossen ist, bekanntermaßen durch Ätzen, Laserablation, Spritzprägen, Heißprägen, Fräsen oder dgl. hergestellt bzw. nachbearbeitet. Demgegenüber ist der Kanal in Form einer Durchgangsöffnung in einem einzigen Stanzprozess herstelltbar und ein Ventilkörper mit einer solchen Elastomerdichtung deshalb günstiger.

Das Mikroventil kann vorzugsweise als Drehventil oder als Schiebeventil ausgebildet sein.

Bei einer besonders bevorzugten Ausführungsform des Mikroventils bildet der Probenaufbereitungschip das Substrat.

Das Mikroventil ist wegen seines einfachen Aufbaus leicht miniaturisierbar. Die funktionale Komponente Ventil kann daher mit höherer Dichte auf dem mikrofluidischen Chip angeordnet werden. Auch die beidseitige Anbringung auf einem Chip ist möglich. Es können auf diese weise noch höhere Integrationsdichten und komplexere Kanalstrukturen und damit eine verbesserte Funktionalität bei gleichem Platzbedarf auf einem Chip erreicht werden.

Das erfindungsgemäße Mikroventil ist insbesondere kombiniert mit eingesenktem Sitz nahezu vollständig in dem Probenaufbereitungschip integrierbar, wenn der Ventilsitz in Form einer Ausnehmung so tief in den Probenaufbereitungschip eingearbeitet ist, dass der Ventilkörper vollständig in den Aufbereitungschip eingelassen werden kann. Ferner kann auch das Klammerelement zumindest teilweise durch geeignete Senkungen oder Ausnehmungen in dem Probenaufbereitungschip in diesem integriert werden. Hierdurch wird die Integrationsdichte der funktionalen Komponenten nochmals erhöht und der Chip behält eine flache Bauform auch bei beidseitiger Anbringung der funktionalen Komponente Ventil.

Weitere Aufgaben, Merkmale und Vorteile der Erfindung werden nachfolgend anhand von Ausführungsbeispielen mit Hilfe der Zeichnungen näher erläutert. Es zeigen:
- Figur 1: ein Mikroventil bekannter Bauart;
- Figur 2: eine perspektivische Ansicht einer ersten Ausführungsform des erfindungsgemäßen Mikroventils auf einem Probenaufbereitungschip;
- Figur 3: der Probenaufbereitungschip mit Mikroventil gemäß Figur 2 in Explosionsdarstellung;
- Figur 4: der Probenaufbereitungschip mit Mikroventil gemäß Figur 2 im perspektivischen Teilschnitt und
- Figur 5: der Probenaufbereitungschip mit Mikroventil gemäß Figur 2 in anderer Perspektive und
- Figur 6: eine Schnittdarstellung durch einen Probenaufbereitungschip mit einer zweiten Ausführungsform des erfindungsgemäßen Mikroventils.

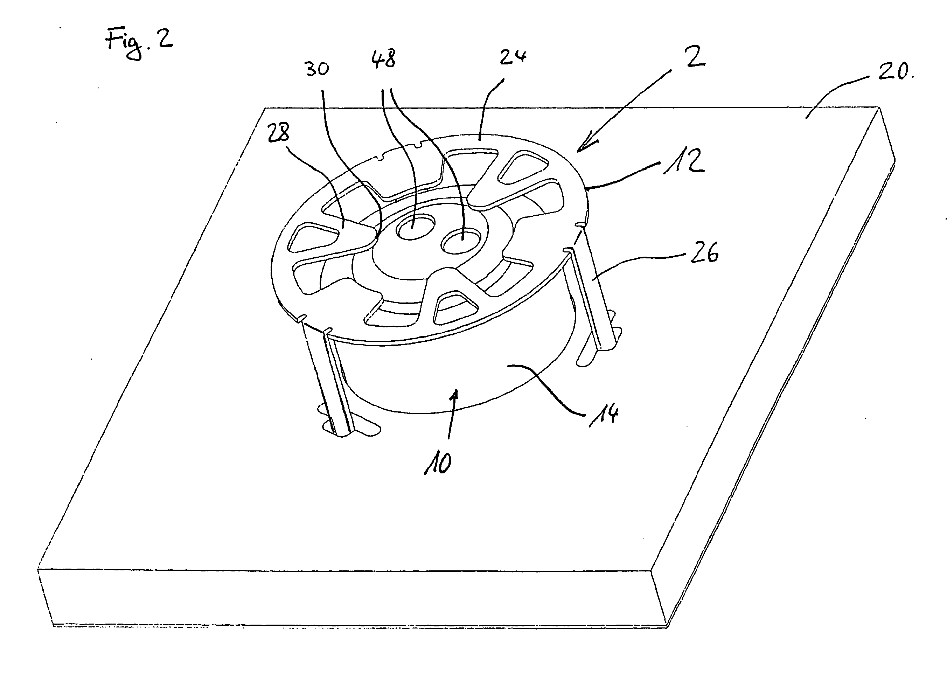

Eine erste Ausführungsform des erfindungsgemäßen Mikroventils mit Probenaufbereitungschip ist in den Figuren 2 bis 5, auf die im Folgenden Bezug genommen wird, perspektivisch aus verschiedenen Richtungen und zum Teil geschnitten dargestellt.

Das Mikroventil ist als Drehventil 2 ausgelegt und weist einen im Wesentlichen zylindrischen Ventilkörper 10 und ein diesen haltendes Klammerelement 12 auf. Der Ventilkörper 10 besteht aus einem formstabilen Teil 14 und einer Elastomerdichtung 16, auf deren Unterseite eine Dichtfläche 18 ausgebildet ist. Das Ventil 2 ist in der nachfolgend beschriebenen Weise auf einem Substrat in Form eines Probenaufbereitungschips 20 angeordnet und befestigt. Mit seiner Dichtfläche 18 liegt das Ventil auf einer korrespondierenden Dichtfläche 22 des Substrats 20 auf.

Das Klammerelement 12 ist in dieser Ausführungsform aus einem Federstahlblech ausgestanzt und in die abgebildete dreidimensionale Form gebogen. Das Klammerelement 12 weist einen ringförmigen Abschnitt 24 zum Andrücken des Ventilkörpers 10 und drei nach unten abgebogene Ankerelemente 26 mit jeweils einer pfeilförmigen Klinke 32 an ihrem unteren Ende zum formschlüssigen Verbinden mit dem Probenaufbereitungschip 20 auf. Von dem ringförmigen Abschnitt 24 gehen radial einwärts drei Biegeelemente 28 ab, die auf der Oberseite des formstabilen Teils 14 des Ventilkörpers 10 anliegen. Die Höhe der Ankerelemente 26 ist in Abhängigkeit von der Höhe des Ventilkörpers 10 so ausgelegt, dass die Biegeelemente 28 in gewünschtem Maße vorgespannt werden und den Ventilkörpers 10 gegen das Substrat 20 andrücken, wenn das Ventil auf dem Substrat 20 montiert ist. Die Biegeelemente 28 haben die Form dreieckiger Laschen, die auf einer Seite in den ringförmigen Abschnitt 24 übergehen und mit ihrer gegenüberliegenden, radial einwärts weisenden Ecke 30 auf dem formstabilen Teil 14 des Ventilkörpers 10 aufliegen. Durch eine kleine Berührungsfläche zwischen den Biegeelementen 28 und dem formstabilen Teil 14 wird der Drehung des Ventilkörpers 10 bei der Betätigung des Drehventils an dieser Stelle nur eine geringe Reibungskraft entgegengesetzt. Die Federkraft, mit der Biegeelemente 28 den Ventilkörper 10 gegen das Substrat 20 andrücken wird bei gegebenem Grundmaterial (Federstahlblech) durch die Geometrie des Klammerelementes 12 bestimmt. Sie ist so ausgelegt, dass der Andruck eine Abdichtung bei möglichst geringem Reibungswiderstand sicherstellt. Hierbei ist der Reibungskoeffizient zwischen der Dichtfläche 18 der Elastomerdichtung 16 und der Dichtfläche 22 des Substrats 20 sowie die Flächengröße zu berücksichtigen.

Das Substrat 20 ist zweiteilig aufgebaut. Es weist einen Träger 34 auf, in den Fluidleitungen in Form von Bohrungen 36 und/oder nutartigen Kanälen 38 auf der Unterseite, d. h. auf der dem Mikroventil abgewandten Seite, eingelassen sind. Das Substrat 20 weist ferner auf seiner Unterseite eine Abdeckfolie 42 auf, mit welcher die Fluidleitungen 36, 38 von der Unterseite des Substrat verschlossen sind. Die Bohrungen 36 öffnen die Kanäle 38 durch den Träger 34 hindurch zum Ventil nach oben.

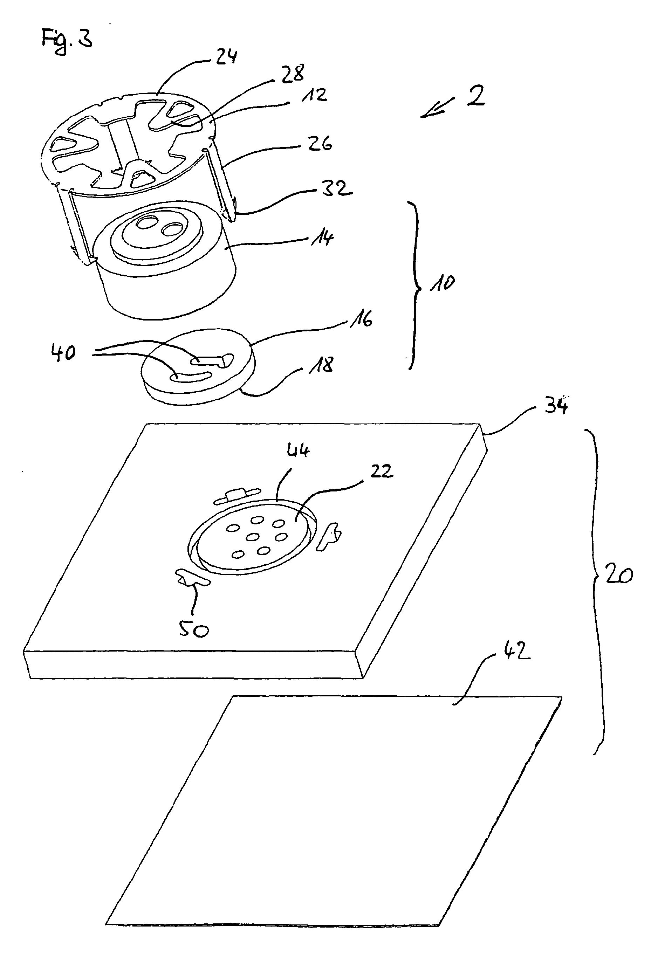

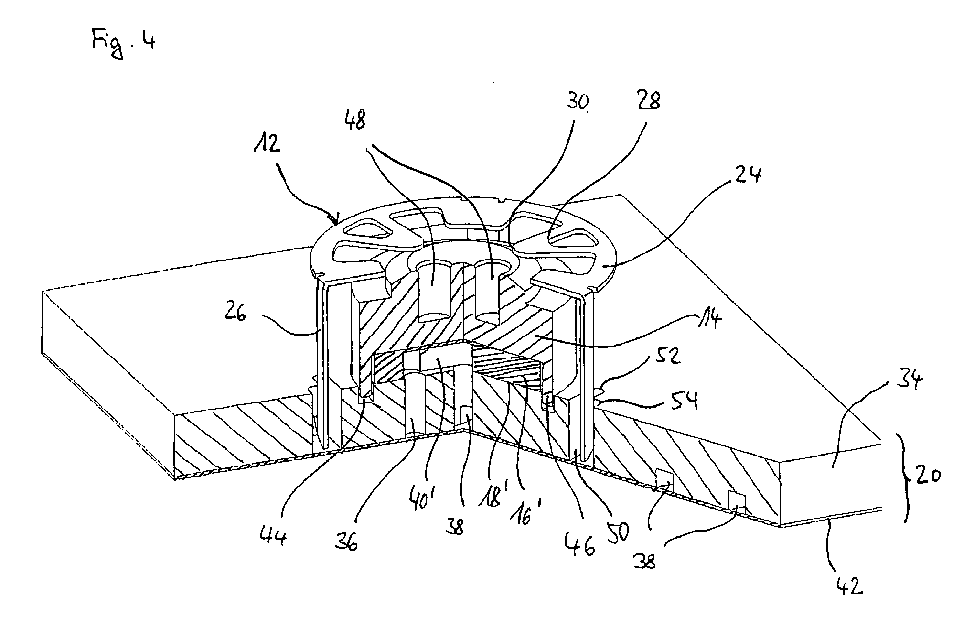

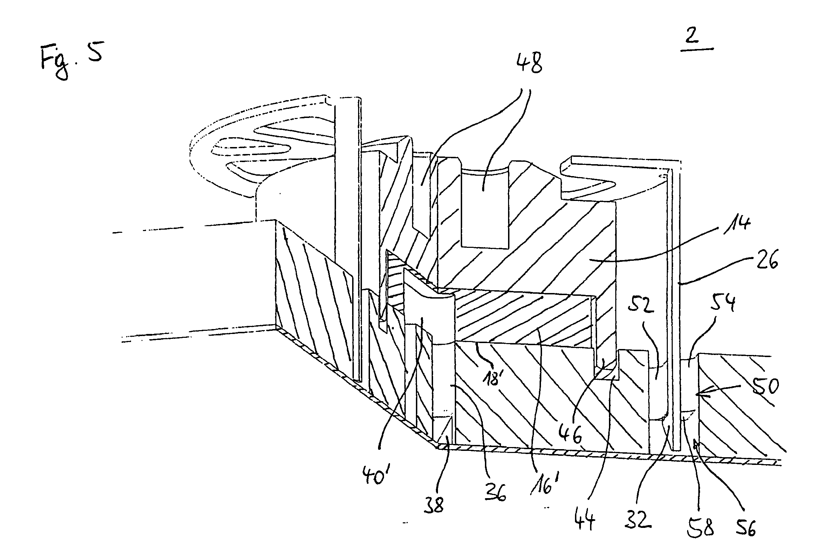

Die Elastomerdichtung weist zur wahlweise einstellbaren fluidischen Verbindung zweier oder mehrerer Bohrungen 36 bzw. Fluidleitungen 38 einen oder mehrere Kanäle auf. Die Kanäle sind entweder als Durchgangsöffnung 40 ausgebildet, welche die Elastomerdichtung 16 vollständig durchsetzen, vgl. Figur 3. In diesem Fall kann die Elastomerdichtung 16 als Stanzteil hergestellt und die Kanäle 40 ausgestanzt werden. In einer anderen Ausführungsform sind die Kanäle als nutartige Vertiefungen 40' von der Seite der Dichtfläche 18' in die Elastomerdichtung 16' eingearbeitet, vgl. Figuren 4 und 5.

Auf der Oberseite des Trägers 34 ist eine die Dichtfläche 22 umgebende Ringnut 44 vorgesehen. Wie in den Figuren 4 und 5 zu erkennen ist, weist der formstabile Teil 14 des Ventilkörpers 10 eine koaxiale, zylindrische Einsenkung auf seiner Unterseite zur Aufnahme der Elastomerdichtung 16, 16' auf. Diese Einsenkung ist tiefer als die Dicke der Elastomerdichtung, so dass ein ringförmiger Rand 46 des formstabilen Teils 14 axial über die Dichtfläche 18 der Elastomerdichtung 16 hinausragt. Der Rand 46 greift in die Ringnut 44 in dem Substrat 20 ein und wirkt zusammen mit der Ringnut 44 als Drehführung für das Mikroventil 2.

Zur Betätigung des Drehventils 2 weist dieses auf seiner Oberseite ein Handhabungselement in Form zweier Zylinderbohrungen 48 auf. Anstelle zweier Bohrungen kann beispielsweise ein Schlitz oder eine andersartige Vertiefung oder ein vorstehenden Ansatz vorgesehen sein, an dem ein jeweils komplementäres Werkzeug zur Betätigung des Ventils formschlüssig angreifen kann.

In den Träger 34 des Substrats 20 sind drei Montageöffnungen 50 auf einem Kreis mit einer 120° Teilung zur formschlüssigen Verbindung mit den Ankerelementen 26 des Klammerelements 12 eingearbeitet. Die Montageöffnungen 50 haben jeweils auf der Oberseite die Form eines abgesetzten Langloches mit einem radial innen liegenden, in tangentialer Richtung langen Abschnitt 52 und einem radial außen liegenden, in tangentialer Richtung kurzen Abschnitt 54. Die Richtungsangaben sind jeweils bezogen auf die Drehachse des Ventils. Der lange Abschnitt 52 dient zur Durchführung der pfeilförmigen Klinke 32 an dem Ankerelement 26, der kurze Abschnitt 54 dient zur Aufnahme der Ankerelemente 26 im Bereich deren schmaleren Schenkels oberhalb der pfeilförmigen Klinken 32. Von der Unterseite weisen die Montageöffnungen 50 eine Einsenkung 56 mit größerer Breite in radialer Richtung auf. Auf diese Weise ist in der Montageöffnung ein Absatz 58 gebildet.

Der Durchmesser des Teilkreises, auf dem sich die langen Abschnitte 52 der Montageöffnungen 50 befinden, ist kleiner als der Durchmesser des Teilkreises, auf dem die Ankerelemente 26 angeordnet sind. Aus diesem Grund müssen die Ankerelemente 26 bei der Montage radial einwärts vorgespannt werden, um mit den Klinken 32 in die langen Abschnitte 52 der Montageöffnungen 50 eingefädelt werden zu können. Wird dann das Klammerelement 12 abgesenkt bis die Biegelemente den Ventilkörper 10 gegen das Substrat 20 in dem gewünschten Maße andrücken, ist die axiale Endstellung des Klammerelements 12 erreicht, in dem die Klinken 32 radial auswärts schnappen und dabei formschlüssig unter die Absätze 58 greifen, so dass das Herausziehen der Ankerelemente aus den Öffnungen 34 gehemmt ist. Aufgrund der Einsenkung 56 ragen die pfeilförmigen Klinken 32 nach der Montage nicht auf der Unterseite aus dem Substrat 20 heraus.

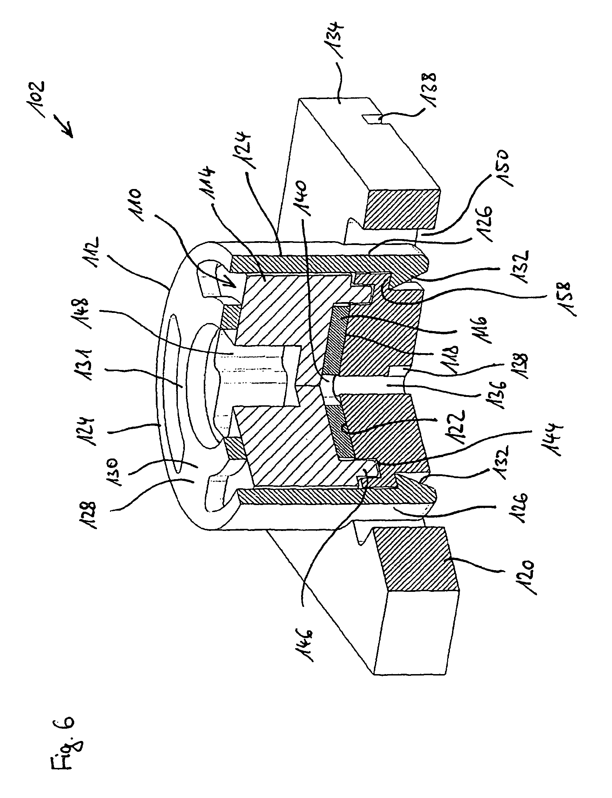

Eine andere Ausführungsform des erfindungsgemäßen Mikroventils ist in Figur 6 dargestellt. Das Mikroventil ist wiederum als Drehventil 102 mit einem im Wesentlichen zylindrischen Ventilkörper 110 und einem diesen haltendes Klammerelement 112 ausgebildet. Der Ventilkörper 110 besteht aus einem formstabilen Teil 114 und einer Elastomerdichtung 116, auf deren Unterseite eine Dichtfläche 118 ausgebildet ist, die auf einer korrespondierenden Dichtfläche 122 des Substrats 120 aufliegt. Das Substrat 120 ist ebenfalls zweiteilig aufgebaut, allerdings ist in Figur 6 nur der Träger 134 dargestellt. In den Träger 134 sind Fluidleitungen in Form von Bohrungen 136 und/oder nutartigen Kanälen 138 auf der Unterseite, d. h. auf der dem Mikroventil abgewandten Seite, eingelassen sind. Die Bohrungen 136 öffnen die Kanäle 138 durch den Träger 134 hindurch zum Ventil nach oben.

Die Elastomerdichtung 116 weist zur wahlweise einstellbaren fluidischen Verbindung zweier oder mehrerer Bohrungen 136 bzw. Fluidleitungen 138 einen oder mehrere Kanäle in Form von Durchgangsöffnung 140 auf.

Auf der Oberseite des Trägers 134 ist wiederum eine die Dichtfläche 122 umgebende Ringnut 144 vorgesehen, in die der ringförmige Rand 146 des formstabilen Teils 114 zur Bildung einer Drehführung eingreift.

Das Handhabungselement zur Betätigung des Drehventils 102 hat in dieser Ausführungsform die Gestalt eines mehrkantigen Innenprofils 148.

Das Mikroventil in der Ausführungsform gemäß Figur 6 unterscheidet sich von dem zuvor beschriebenen in erster Linie dadurch, dass als Klammerelement 112 ein Kunststoff-Spritzgussteil eingesetzt ist. Das Klammerelement 112 ist, wie das Klammerelement 12, einstückig ausgebildet. Es weist einen zylindrischen Gehäuseabschnitt 124 mit mehreren, vorzugsweise drei auf seiner Oberseite radial einwärts gerichteten, elastischen Biegeelementen 128 auf. Die Biegeelemente 128 sind an ihrem radial inneren Ende 130 mit einem Ringabschnitt 131 zur Stabilisation und Einstellung der elastizitätsbedingten Andrückkraft verbunden. Mit diesem Ringabschnitt 131 liegt das Klammerelement 112 auf der Oberseite des formstabilen Teils 114 des Ventilkörpers 110 auf. Die Federkraft, mit der Biegeelemente 128 den Ventilkörper 110 gegen das Substrat 120 andrücken, wird auch hier bei gegebenem Grundmaterial (Kunststoff oder kunststoffumspritztes Federstahlblech) durch die Geometrie des Klammerelementes 112 bestimmt.

Der Gehäuseabschnitt 124 hat die Gestalt eines Hohlzylinders, der den Ventilzylinder 110 umschließt und auf der Oberseite des Substrats 120 aufsitzt. Mehrere, vorzugsweise drei, Ankerelemente 126 gehen in axialer Richtung von der Zylinderwand des Gehäuseabschnittes 124 nach unten ab. Die Ankerelemente 126 weisen an ihrem freien Ende jeweils eine Klinke oder einen Schnapphaken 132 zum formschlüssigen Verbinden mit dem Probenaufbereitungschip 120 auf. In dem Träger 134 des Substrats 120 sind drei Montageöffnungen 150 auf einem Kreis mit einer 120° Teilung angeordnet. Die Montageöffnungen 150 und weisen von der Unterseite des Trägers 134 jeweils eine radial einwärts gerichtete Hinterschneidung 158 auf. Das Klammerelement 112 und die Montagöffnungen 150 sind so geformt bzw. dimensioniert, dass die Ankerelemente 126 beim Einführen der Schnapphaken 132 in die korrespondierenden Montageöffnungen 150 unter Ausnutzung der Elastizität des Materials radial auswärts ausweichen und dabei vorgespannt werden. Wird das Klammerelement 112 weiter abgesenkt bis die Biegelemente 128 den Ventilkörper 110 gegen das Substrat 120 in dem gewünschten Maße andrücken, ist die axiale Endstellung des Klammerelements 112 erreicht, in dem die Schnapphaken 132 radial einwärts einschnappen und dabei formschlüssig unter die Hinterschneidungen 158 greifen, so dass das Herausziehen der Ankerelemente 126 aus den Öffnungen 150 gehemmt ist.

Die Höhe der Ankerelemente 126 ist in Abhängigkeit von der Dicke des Substrats 120 bzw. der Höhe der Hinterschneidung 158 so ausgelegt, dass die Biegeelemente 128 in gewünschtem Maße vorgespannt werden und den Ventilkörpers 110 gegen das Substrat 120 andrücken, wenn das Ventil auf dem Substrat 120 montiert ist.

Hinsichtlich der Bereitstellung der Andrückkraft sind alle gezeigten Ausführungsbeispiele insoweit identisch, als die Elastizität jeweils von dem Ventilkörper und genauer von der Elastomerdichtung einerseits und von dem Klammerelement und genauer von den Biegelementen andererseits bereitgestellt wird. Der formstabile Teil der Ventilkörper ist jeweils so steif, dass sich die Andrückkraft über die Elastomerdichtung gleichmäßig verteilt.

Abweichend hiervon ist es möglich, den Ventilkörper als einstückiges Element auszubilden.

Der formstabile Teil und die Elastomerdichtung können grundsätzlich mittels Form-, Reib- und Stoffschluss verbunden sein. Wie bereits erwähnt, können beide Teile des Ventilkörpers in einem gemeinsamen Zwei-Komponenten-Spritzguss hergestellt werden. Sie können alternativ separat hergestellt und miteinander verklebt werden. Abweichend von den gezeigten Ausführungsbeispielen kann ein Formschluss auch über Mitnehmer in Form von Vorsprüngen an dem formstabilen Teil, die in entsprechende Ausnehmungen in der Elastomerdichtung eingreifen oder umgekehrt erzielt werden.

### Bezugszeichenliste

- 2: Drehventil
- 10: Ventilkörper
- 12: Klammerelement
- 14: formstabiler Teil
- 16, 16': Elastomerdichtung
- 18, 18': Dichtfläche der Elastomerdichtung
- 20: Probenaufbereitungschip/Substrat
- 22: Dichtfläche des Substrats
- 24: ringförmiger Abschnitt
- 26: Ankerelement
- 28: Biegeelement
- 30: Ecke des Biegelements
- 32: Klinke
- 34: Träger
- 36: Fluidleitung, Bohrung
- 38: Fluidleitung, nutartiger Kanal
- 40, 40': Kanal
- 42: Abdeckfolie
- 44: Ringnut
- 46: ringförmiger Rand
- 48: Zylinderbohrung
- 50: Montageöffnung
- 52: langer Abschnitt
- 54: kurzer Abschnitt
- 56: Einsenkung
- 58: Absatz

- 102: Drehventil
- 110: Ventilkörper
- 112: Klammerelement
- 114: formstabiler Teil
- 116: Elastomerdichtung
- 118: Dichtfläche der Elastomerdichtung
- 120: Probenaufbereitungschip/Substrat
- 122: Dichtfläche des Substrats
- 124: zylindrischer Gehäuseabschnitt
- 126: Ankerelement
- 128: Biegeelement
- 130: inneres Ende des Biegelements
- 131: Ringabschnitt
- 132: Klinke, Schnapphaken
- 134: Träger
- 136: Fluidleitung, Bohrung
- 138: Fluidleitung, nutartiger Kanal
- 140: Kanal
- 144: Ringnut
- 146: ringförmiger Rand
- 148: Profil
- 150: Montageöffnung
- 158: Hinterschneidung

- 210: Substrat
- 212: Ventilkörper
- 214: Dichtfläche
- 216: Kontakt- oder Dichtfläche
- 218: Ventilzylinder
- 220: Druckfeder
- 222: Gehäuse
- 224: Schraubverbindung

## Patentansprüche

1. Mikroventil zur Steuerung von Fluidströmen in einem Mikrofluidiksystem, insbesondere in einem Lab-On-a-Chip-System, mit einem Substrat (20, 120), das eine Dichtfläche (22, 122) aufweist, und einem relativ zu dem Substrat (20, 120) beweglich angeordneten Ventilkörper (10, 110), der eine Dichtfläche (18, 18', 118) aufweist und wenigstens einen Kanal (40, 40', 140) zur wahlweisen Verbindung und/oder Trennung von Fluidleitungen (36, 38, 136, 138) in dem Substrat (20, 120) definiert, wobei die Dichtfläche (18, 18', 118) des Ventilkörpers (10, 110) und die Dichtfläche (22, 122) des Substrats (20) fluiddicht aneinander anliegen,
**dadurch gekennzeichnet, dass** der Ventilkörper (10, 110) mittels eines mit dem Substrat (20, 120) formschlüssig verbundenen Klammerelementes (12, 112) mit seiner Dichtfläche (18, 118) gegen die Dichtfläche (22, 122) des Substrats (20, 120) angedrückt wird, dass das Klammerelement (12, 112) zumindest abschnittsweise biegeelastisch ausgebildet ist und dass das Klammerelement (12, 112) und das Substrat (20, 120) mittels einer Schnappverbindung miteinander in Eingriff stehen.

2. Mikroventil nach Anspruch 1,
**dadurch gekennzeichnet, dass** der Ventilkörper (10, 110) druckelastisch ausgebildet ist.

3. Mikroventil nach Anspruch 2,
**dadurch gekennzeichnet, dass** der Ventilkörper (10, 110) zumindest teilweise aus einem Elastomer besteht.

4. Mikroventil nach Anspruch 3,
**dadurch gekennzeichnet, dass** der Ventilkörper (10, 110) einen formstabilen Teil (14, 114) und eine Elastomerdichtung (16, 16', 116) aufweist, an der die Dichtfläche (18, 118) ausgebildet ist, wobei eine Andrückkraft von dem Klammerelement (12, 112) über den formstabilen Teil (14, 114) auf die Elastomerdichtung (16, 16', 116) wirkt.

5. Mikroventil nach Anspruch 4,
**dadurch gekennzeichnet, dass** der formstabile Teil (14, 114) zusammen mit der Elastomerdichtung (16, 16', 116) im Zwei-Komponenten-Spritzguss hergestellt ist.

6. Mikroventil nach einem der Ansprüche 4 oder 5,
**dadurch gekennzeichnet, dass** der wenigstens eine Kanal (40, 40', 140) in der Elastomerdichtung (16, 16', 116) als Durchgangsöffnung ausgebildet ist.

7. Mikroventil nach Anspruch 1,
**dadurch gekennzeichnet, dass** das Klammerelement (12, 112) aus Federstahl besteht.

8. Probenaufbereitungschip mit einem Mikroventil nach einem der vorstehenden Ansprüche, bei dem der Probenaufbereitungschip das Substrat (20, 120) bildet.

9. Verfahren zur Herstellung eines Mikroventils in einem Mikrofluidiksystem, insbesondere in einem Lab-On-a-Chip-System, nach einem der Ansprüche 1 bis 7, bei dem ein Ventilkörper (10, 110) mit einer Dichtfläche (18, 18', 118) auf eine Dichtfläche (22, 122) eines Substrats (20, 120) aufgelegt, der Ventilkörper (10, 110) mittels eines Klammerelementes (12, 112) mit seiner Dichtfläche (18, 18', 118) gegen die Dichtfläche (22, 122) des Substrats (20, 120) fluiddicht andrückt und das Klammerelement (12, 112) formschlüssig mit dem Substrat (20, 120) verbunden wird.

## Claims

1. Microvalve for controlling fluid streams in a microfluidics system, in particular in a lab-on-a-chip system, having a substrate (20, 120), which has a sealing surface (22, 122), and a valve body (10, 110), which is arranged movably in relation to the substrate (20, 120), has a sealing surface (18, 18', 118) and defines at least one channel (40, 40', 140) for optionally connecting and/or separating fluid lines (36, 38, 136, 138) in the substrate (20, 120), the sealing surface (18, 18', 118) of the valve body (10, 110) and the sealing surface (22, 122) of the substrate (20, 120) lying against one another in a fluid-tight manner, **characterized in that** the valve body (10, 110) is pressed with its sealing surface (18, 118) against the sealing surface (22, 122) of the substrate (20, 120) by means of a clamping element (12, 112) connected to the substrate (20, 120) in a form-fitting manner, **in that** the clamping element (12, 112) is formed such that it is at least in part flexurally elastic and **in that** the clamping element (12, 112) and the substrate (20, 120) are in engagement with each other by means of a snap connection.

2. Microvalve according to Claim 1, **characterized in that** the valve body (10, 110) is formed such that it is compressively elastic.

3. Microvalve according to Claim 2, **characterized in that** the valve body (10, 110) consists at least partly of an elastomer.

4. Microvalve according to Claim 3, **characterized in that** the valve body (10, 110) has a dimensionally stable part (14, 114) and an elastomer seal (16, 16', 116), on which the sealing surface (18, 118) is formed, a pressing force acting on the elastomer seal (16, 16', 116) from the clamping element (12, 112) via the dimensionally stable part (14, 114).

5. Microvalve according to Claim 4, **characterized in that** the dimensionally stable part (14, 114) is produced together with the elastomer seal (16, 16', 116) by two-component injection moulding.

6. Microvalve according to either of Claims 4 and 5, **characterized in that** the at least one channel (40, 40', 140) in the elastomer seal (16, 16', 116) is formed as a through-opening.

7. Microvalve according to Claim 1, **characterized in that** the clamping element (12, 112) consists of spring steel.

8. Sample processing chip having a microvalve according to one of the preceding claims, in which the sample processing chip forms the substrate (20, 120).

9. Method for producing a microvalve in a microfluidics system, in particular in a lab-on-a-chip system, according to one of Claims 1 to 7, in which a valve body (10, 110) is placed with a sealing surface (18, 18', 118) onto a sealing surface (22, 122) of a substrate (20, 120), the valve body (10, 110) is pressed with its sealing surface (18, 18', 118) against the sealing surface (22, 122) of the substrate (20, 120) by means of a clamping element (12, 112) in a fluid-tight manner and the clamping element (12, 112) is connected to the substrate (20, 120) in a form-fitting manner.

## Revendications

1. Micro-soupape pour la commande de courants de fluide dans un système micro-fluide, en particulier dans un système Lab-On-a-Chip, avec un substrat (20, 120), qui présente une face d'étanchéité (22, 122), et avec un corps de soupape (10, 110) disposé de façon mobile par rapport au substrat (20, 120), qui présente une face d'étanchéité (18, 18', 118) et qui définit au moins un canal (40, 40', 140) pour, au choix, le raccordement et/ou la séparation de conduits de fluide (36, 38, 136, 138) dans le substrat (20, 120), dans laquelle la face d'étanchéité (18, 18', 118) du corps de soupape (10, 110) et la face d'étanchéité (22, 122) du substrat (20, 120) s'appliquent l'une contre l'autre de façon étanche au fluide, **caractérisée en ce que** le corps de soupape (10, 110) est pressé avec sa face d'étanchéité (18, 118) contre la face d'étanchéité (22, 122) du substrat (20, 120) au moyen d'un élément d'attache (12, 112) relié par emboîtement au substrat (20, 120), **en ce que** l'élément d'attache (12, 112) est au moins localement élastique en flexion, et **en ce que** l'élément d'attache (12, 112) et le substrat (20, 120) sont en prise l'un avec l'autre au moyen d'un assemblage à déclic.

2. Micro-soupape selon la revendication 1, **caractérisée en ce que** le corps de soupape (10, 110) est élastique en compression.

3. Micro-soupape selon la revendication 2, **caractérisée en ce que** le corps de soupape (10, 110) est constitué au moins en partie d'un élastomère.

4. Micro-soupape selon la revendication 3, **caractérisée en ce que** le corps de soupape (10, 110) présente une partie de forme stable (14, 114) et un joint d'étanchéité élastomère (16, 16', 116), sur lequel la face d'étanchéité (18, 118) est formée, dans laquelle une force de pression agit de l'élément d'attache (12, 112) via la partie de forme stable (14, 114) sur le joint d'étanchéité élastomère (16, 16', 116).

5. Micro-soupape selon la revendication 4, **caractérisée en ce que** la partie de forme stable (14, 114) est fabriquée conjointement avec le joint d'étanchéité élastomère (16, 16', 116) par moulage par injection à deux composants.

6. Micro-soupape selon une des revendications 4 ou 5, **caractérisée en ce que** ledit au moins un canal (40, 40', 140) est réalisé sous la forme d'une ouverture de passage dans le joint d'étanchéité élastomère (16, 16', 116).

7. Micro-soupape selon la revendication 1, **caractérisée en ce que** l'élément d'attache (12, 112) est constitué d'acier à ressort.

8. Puce de préparation d'échantillon avec une micro-soupape selon l'une quelconque des revendications précédentes, dans laquelle la puce de préparation d'échantillon forme le substrat,(20, 120).

9. Procédé de fabrication d'une micro-soupape dans un système micro-fluide, en particulier dans un système Lab-On-a-Chip, selon l'une quelconque des revendications 1 à 7, dans lequel on dépose un corps de soupape (10, 110) avec une face d'étanchéité (18, 18', 118) sur une face d'étanchéité (22, 122) d'un substrat (20, 120), on presse le corps de soupape (10, 110) avec sa face d'étanchéité (18, 18', 118) contre la face d'étanchéité (22, 122) du substrat (20, 120) de façon étanche au fluide au moyen d'un élément d'attache (12, 112) et on assemble l'élément d'attache (12, 112) par emboîtement avec le substrat (20, 120).
